# EUROPÄISCHE PATENTSCHRIFT

(11) **EP 0 711 397 B1**
(45) Veröffentlichungstag und Bekanntmachung des Hinweises auf die Patenterteilung: **08.10.1997**
(21) Anmeldenummer: 94925374.4
(22) Anmeldetag: 21.07.1994
(51) Int. Cl.: F27D 13/00, C21B 7/18, F27D 3/00

(54) **CHARGIERGUTVORWÄRMER**
CHARGE PREHEATER
PRECHAUFFEUR DE CHARGE

(30) Priorität: 05.08.1993 DE 4326369
(43) Veröffentlichungstag der Anmeldung: 15.05.1996
(73) Patentinhaber: FUCHS SYSTEMTECHNIK GMBH, D-77731 Willstätt-Legelshurst (DE)
(72) Erfinder: FUCHS, Gerhard, D-77694 Kehl-Bodersweier (DE); EHLE, Joachim, D-77794 Lautenbach (DE); VON PLOETZ, Klaus, D-77656 Offenburg (DE)
(74) Vertreter: Blumbach, Kramer & Partner
(86) Internationale Anmeldenummer: EP9402405
(87) Internationale Veröffentlichungsnummer: WO9504910

(56) Entgegenhaltungen:
- EP-A- 0 291 701
- EP-A- 0 356 290
- EP-A- 0 385 434
- DE-C- 622 757
- FR-A- 2 573 725
- US-A- 4 547 099

## Beschreibung

Die Erfindung betrifft einen Chargiergutvorwärmer zum Vorwärmen von Chargiergut für ein metallurgisches Schmelzaggregat gemäß dem Oberbegriff von Patentanspruch 1.

Ein Chargiergutvorwärmer dieser Art ist durch die DE-A1-39 40 558 bekannt geworden. Der bekannte Chargiergutvorwärmer weist im unteren Bereich eines schachtförmigen Behälters einander gegenüberliegende, durch ein Stellglied verschwenkbare Sperrorgane auf, die jeweils parallel und im Abstand zueinander angeordnete Roststäbe bzw. Finger enthalten, die in einem sich an einem Rahmen des Behälters abstützenden Lager gelagert sind und aus einer Schließstellung, in der innere Abschnitte der Finger in den Innenraum des Behälters ragen, in eine Freigabestellung nach unten schwenkbar sind, in der diese Abschnitte der Finger nach unten weisen und den Durchtritt durch den Behälter freigeben.

Bei diesem Chargiergutvorwärmer ist es möglich, in der Schließstellung der Sperrorgane Chargiergut im Behälter zurückzuhalten und durch hindurchgeleitete heiße Gase zu erhitzen und nach dem Erhitzen durch Verschwenken der Sperrorgane in die Freigabestellung das Chargiergut in ein darunter befindliches metallurgisches Gefäß zu entleeren.

Bei dem bekannten Chargiergutvorwärmer ist der schachtförmige Behälter mit einem rechteckigen Querschnitt ausgebildet.

Durch die EP-B1-0 291 701 ist ein Chargiergutvorwärmer bekannt geworden, mit einem schachtförmigen Behälter, der in einem Rahmen befestigt ist und im unteren Bereich einander gegenüber liegende, durch ein Stellglied verschwenkbare Sperrorgane aufweist, die jeweils parallel und im Abstand zueinander angeordnete Roststäbe enthalten, die in einem sich an dem Rahmen abstützenden ersten Drehlager gelagert sind, wobei die Roststäbe im Tragbalken um eine waagrechte Achse drehbar gelagert sind und ihnen an den Eintrittsstellen in den Behälter elastische Auflager zugeordnet sind.

Durch diese Ausbildung eines Chargiergutvorwärmers ist es möglich, einerseits die starken Stoßbeanspruchungen beim Einbringen von Chargiergut in den Behälter zu beherrschen, indem diese durch elastische Lager aufgenommen und in den Rahmen des Behälters abgeleitet werden, es ist darüber hinaus durch die individuelle Lagerung der Roststäbe im Tragbalken möglich, einen beschädigten Roststab auszuwechseln, ohne daß hierdurch der Betrieb des Chargiergutvorwärmers unterbrochen werden müsste.

Bei dem Chargiergutvorwärmer der einleitend genannten Art sind die Roststäbe bzw. Finger jedes Sperrglieds als auskragende, am Ende eingespannte Träger einer drehbaren Walze ausgebildet, die in einem Lager gelagert ist, welches sich am Rahmen des Behälters abstützt. Dies führt insbesondere bei hohen schachtförmigen Behältern zu einer starken mechanischen Belastung des Drehlagers und von Stellorganen, wenn beispielsweise aus 4 Meter Höhe Schwerschrott auf die Finger fällt. Selbst wenn das Lager unter Einbeziehung von Stoßdämpfern im Rahmen befestigt wird, kann bei derartigen Stoßbelastungen nicht die gewünschte Standzeit garantiert werden.

Aufgabe der Erfindung ist es bei einem Chargiergutvorwärmer der einleitend genannten Art, die beim Einbringen von Chargiergut auf die Sperrorgane einwirkenden Stoßkräfte direkt in den Rahmen einzuleiten, ohne hiermit Stellorgane zu belasten. Die Beanspruchung der Drehlager der Finger im Rahmen soll verringert, und damit deren Haltbarkeit vergrößert werden. Die Konstruktion soll den Einsatz von Stoßdämpfern mit einem größeren Federweg erlauben.

Der erfindungsgemäße Chargiergutvorwärmer ist durch die Merkmale des Anspruches 1 gekennzeichnet. Vorteilhafte Ausgestaltungen der Erfindung sind den übrigen Ansprüchen zu entnehmen.

Danach sind die Finger eines Sperrorgans in ihrem mittleren Abschnitt drehbar gelagert und es ist ein durch eine Öffnung in der Behälterwand nach außen geführter äußerer Abschnitt über einen Kniehebelmechanismus in einem weiteren Drehlager des Rahmes gelagert. In der Schließstellung der Sperrorgane befindet sich der Kniehebelmechanismus in der Strecklage, daß heißt die beiden Hebelarme dieses Mechanismus liegen auf einer Geraden, so daß am Kniehebelmechanismus angelenkte Stellorgane vom Weg der Kraftübertragung über den gestreckten Kniehebelmechanismus in den Rahmen entkoppelt sind. Jedem Roststab ist hierbei ein eigener Kniehebelmechanismus zugeordnet. Für eine gemeinsame Betätigung der Kniehebelmechanismen sind entweder die unteren oder die oberen Hebelarme der Kniehebelmechanismen eines Sperrorgans durch ein Verbindungsglied, vorzugsweise einen Balken, miteinander verbunden, an dem ein sich in einem dritten Drehlager des Rahmens abstüztendes Stellglied gelenkig angreift. Vorzugsweise sind dem Verbindungsglied zwei Stellglieder zugeordnet.

Vorzugsweise sind die Finger in der Schließstellung der Sperrorgane schräg nach unten geneigt, wobei sich als Neigungswinkel gegenüber der Waagrechten 30° im Hinblick auf die Stoßbeanspruchung und die Abdichtung der Austrittsöffnungen der Finger als besonders günstig erwiesen haben. Aus dieser Schließstellung werden die Finger um 60° nach unten in die Freigabestellung bewegt, in der sie im wesentlichen mit den darüber befindlichen Schachtwänden fluchten.

Werden die Finger schräg nach unten geneigt, so vergrößert sich im Vergleich zu ihrer waagrechten Anordnung der Abbremsweg. Bei einer Neigung von 30° sind es etwa 13 %. Außerdem teilen sich die auf die Finger einwirkenden Kräfte in eine Komponente senkrecht zum Finger und eine Komponente parallel zum Finger auf. Für die kritische Biegespannung unmittelbar in der Nähe des ersten Lagers ist in erster Linie die Komponente senkrecht zum Finger maßgebend. Bei einem Neigungswinkel von 30° wird eine Reduktion der Biegespannung von ca. 13% erzielt.

Wegen der parallel zum Finger auf das auftreffende Schrottpaket einwirkenden Kraftkomponente ändert sich die Richtung des Bremsweges für den Schwerpunkt des Blechpakets und führt damit ebenfalls zu einer Verlängerung des Bremsweges. Unter Berücksichtigung sämtlicher Komponenten läßt sich hierdurch eine Reduzierung der kritischen Last um etwa 25% erreichen.

Zur Abdämpfung der Stoßkräfte sind entweder in den untern oder in den oberen Hebelarmen der Kniehebelmechanismen Stoßdämpfer vorgesehen. Ferner können bei großen Stoßbelastungen zwischen den ersten Drehlagern der Finger und dem Rahmen Stoßdämpfer vorgesehen sein. In diesem Fall sind die ersten Drehlager in Führungen des Rahmens senkrecht verschiebbar und stützen sich über Stoßdämpfer am Rahmen ab.

Besonders vorteilhaft hat es sich erwiesen, die Finger jeweils in einem eigenen Lagergehäuse zu lagern, das zusammen mit dem Finger eine auswechselbare konstruktive Einheit bildet. Hierdurch ist es möglich während des Betriebs einzelne Finger zusammen mit ihren Drehlagern auszuwechseln. In diesem Fall sind vorzugsweise die Lagergehäuse über individuelle Stoßdämpfer am Rahmen abgestützt.

Die Erfindung wird durch Ausführungsbeispiele anhand von 4 Figuren näher erläutert. Es zeigen
- Fig. 1: in schematischer Darstellung einen Chargiergutvorwärmer, bei dem sich die Finger in der Schließstellung befinden,
- Fig. 2: eine der Fig. 1 entsprechende Ansicht, bei der sich die Finger in der Freigabestellung befinden;
- Fig. 3: einen Ausschnitt zur Verdeutlichung der Durchführung eines Fingers durch die Behälterwand, wobei sich hier das erste Lager über einen Stoßdämpfer am Rahmen abstützt; und
- Fig. 4: in einer perspektivischen Darstellung einen Ausschnitt, der ein als eine auswechselbare Einheit ausgebildetes, erstes Lager mit einem Finger im eingebauten Zustand zeigt.

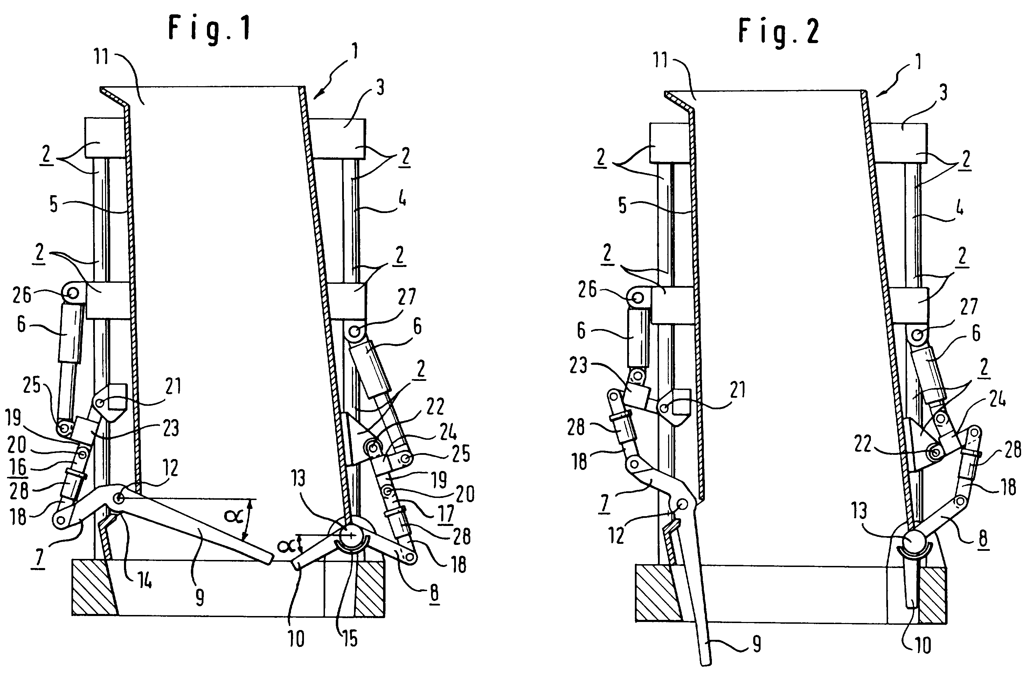

Der in Fig. 1 dargestellte Chargiergutvorwärmer 1 enthält einen Rahmen 2 in Form einer quaderförmigen Käfigkonstruktion aus waagrechten Balken 3 und senkrechten Säulen 4. Innerhalb des Rahmens 2 befindet sich ein Schacht 5 mit etwa rechteckigem Querschnitt, dessen Innenraum sich nach unten erweitert. Im unteren Bereich des Schachtes 5 sind einander gegenüberliegende, jeweils durch zwei Stellglieder 6 (es ist nur jeweils das vordere sichtbar) verschwenkbare Sperrorgane 7 und 8 vorgesehen. Die Sperrorgane weisen jeweils parallel und im Abstand zueinander angeordnete Finger 9 bzw. 10 auf. In Fig. 1 ist ein Finger 9 des ersten Sperrorgans 7 und ein Finger 10 des zweiten Sperrorgans 8 sichtbar. Die übrigen Finger liegen jeweils parallel hierzu von der nicht dargestellten Vorderwand des Schachtes bis zur Rückwand 11 des Schachtes, wobei der Abstand zwischen den einzeinen Fingern so gewählt ist, daß in der in Fig. 1 dargestellten Stellung der Sperrorgane 7 und 8 die Finger 9 und 10 ein von oben in den Schacht 5 eingefülltes Chargiergut im Schacht zurückhalten können und gleichzeitig zwischen den einzelnen Fingern ein ausreichender Durchtrittsquerschnitt für Heizgase zum Vorwärmen des Chargierguts gewährleistet ist.

Die Finger 9 bzw. 10 sind jeweils in einem ersten Drehlager 12 bzw. 13 drehbar gelagert, wobei das Drehlager als sich am Rahmen abstützender Drehzapfen (vgl. Lager 12) oder als sich am Rahmen abstützende Lagerschale ausgebildet sein kann, die eine Drehwelle aufnimmt, an der der Finger 10 oder eine Gruppe von Fingern 10 befestigt ist (vgl. Lager 13).

Aus Fig. 1 ist ersichtlich, daß die Finger 9 bzw. 10 mit einem mittleren Abschnitt im ersten Lager 12 bzw. 13 gelagert und jeweils durch eine Öffnung 14 bzw. 15 in der betreffenden Schachtwand nach außen geführt sind, so daß bei jedem Finger 9 bzw. 10 ein innerer, in den Innenraum des Schachtes ragender Abschnitt und ein äußerer Abschnitt definiert ist, der sich bezogen auf den inneren Abschnitt jeweils auf der entgegengesetzten Seite des ersten Drehlagers befindet.

Der äußere Abschnitt des Fingers 9 bzw. 10 ist jeweils über einen Kniehebelmechanismus 16 bzw. 17, der jeweils aus einem unteren Arm 18 und einem oberen Arm 19 besteht, die durch ein Scharniergelenk 20 miteinander verbunden sind, in einem zweiten Drehlager 21 bzw. 22 des Rahmens 2 gelagert. Im vorliegenden Fall ist jedem der parallel angeordneten Finger 9 ein eigener Kniehebelmechanismus 16 zugeordnet. Das gleiche gilt für die parallel zueinander angeordneten Finger 10. Es ist jedoch auch möglich zwei oder mehreren Fingern eines Sperrorgans einen gemeinsamen Kniehebelmechanismus zuzuordnen. Zur gemeinsamen Betätigung sämtlicher Finger 9 bzw. 10 eines Sperrorgans 7 bzw. 8 sind bei dem Ausführungsbeispiel die oberen Hebelarme 19 der Kniehebelmechanismen 16 bzw. 17 eines Sperrorgans 7 bzw. 8 durch ein Verbindungsglied, nämlich jeweils einen Balken 23 bzw. 24, miteinander verbunden und an diesem Balken greift über ein Gelenk 25 das Stellglied 6 an, das sich an einem dritten Drehlager 26 bzw. 27 des Rahmens abstützt. Das Stellglied 6 ist im vorliegenden Fall ein Hydraulikzylinder, der bei der in Fig. 1 dargestellten Position ausgefahren ist und hierdurch den Kniehebelmechanismus 16 bzw. 17 in der Strecklage hält, das heißt in einer Lage, in der die beiden Hebelarme 18 und 19 miteinander fluchten. In dieser Position des Kniehebelmechanismus befinden sich die Finger 9 bzw. 10 in der in Fig. 1 gezeigten Schließstellung. Wie aus der Figur ebenfalls ersichtlich ist, sind bei diesem Ausführungsbeispiel die zweiten Drehlager 21 bzw. 22 höher als die ersten Drehlager 12 bzw. 13 und die dritten Drehlager 26 bzw. 27 höher als die zweiten Drehlager 21 bzw. 22 angeordnet.

Zum Abdämpfen von Stößen, die beim Einfüllen von Chargiergut in den Schacht 5 aufgrund der Fallenergie auf die Finger 9 bzw. 10 einwirken, sind bei dem dargestellten Ausführungsbeispiel in den unteren Armen 18 der Kniehebelmechanismen 16 bzw. 17 Stoßdämpfer 28 vorgesehen, die beim Aufprall von Chargiergut auf die Finger eine Winkelbewegung der inneren Abschnitte dieser Finger um die Lager 12 bzw. 13 zulassen, und hierbei die Stoßenergie dämpfen. Hierdurch wird die Biegebeanspruchung der Finger wesentlich reduziert.

Da sich in der Schließstellung der Sperrorgane 7 bzw. 8 die Kniehebelmechanismen 16 bzw. 17 in ihrer Strecklage befinden, werden die beim Einfüllen von Chargiergut auf die Finger 9 bzw. 10 einwirkenden Stoßkräfte über die Gelenke direkt in das zweite Lager 21 bzw. 22 eingeleitet. Die Stellorgane 6 sind vom Kraftfluß entkoppelt.

Aus den bereits erwähnten Gründen sind die Finger 9 und 10 in der in Fig. 1 dargestellten Schließstellung der Sperrorgane schräg nach unten geneigt. Als vorteilhaft hat sich ein Neigungswinkel a von etwa 30° erwiesen. Die äußeren Abschnitte der Finger 9 bzw. 10 sind nach unten abgewinkelt. Diese Maßnahme dient dazu, bei dem angestrebten langen Dämpfungsweg für die Stoßdämpfer 28 den verfügbaren Platz optimal zu nutzen und eine sichere Betätigung durch die Stellorgane 6 zu gewährleisten.

Bei dem in Fig. 1 dargestellten Ausführungsbeispiel sind die inneren Abschnitte der Finger 9 wesentlich länger ausgebildet als die inneren Abschnitte der Finger 10. Hierdurch wird erreicht, daß, beim Verschwenken der Sperrorgane 7 bzw. 8 aus der in Fig. 1 dargestellten Schließstellung in die in Fig. 2 dargestellte Freigabestellung, das im Schacht befindliche Chargiergut einseitig, und zwar im vorliegenden Fall einseitig nach rechts, chargiert werden kann. Dies ist vorteilhaft, wenn der Schacht des Chargiergutvorwärmers in Verbindung mit einem Schmelzaggregat eingesetzt wird, bei dem er seitlich im Deckelbereich gehalten wird, weil hierdurch ein Chargieren zur Mitte des Gefäßes hin möglich ist.

In Fig. 2 ist die Freigabestellung der Sperrorgane 7 und 8 dargestellt. Die Sperrorgane werden aus der in Fig. 1 dargestellten Schließstellung in die Freigabestellung dadurch gebracht, daß die Stellglieder 6 aus der ausgefahrenen Position in die zurückgezogene Position gebracht, und hierdurch über den Balken 23 bzw. 24 die oberen Hebelarme 19 der Kniehebelmechanismen 16 bzw. 17 angehoben und damit die Finger 9 bzw. 10 um ihre ersten Lager 12 bzw. 13 geschwenkt werden bis deren innere Abschnitte etwa senkrecht nach unten weisen, so daß der Durchtritt durch den Schacht freigegeben wird. Der Schwenkwinkel beträgt hierbei etwa 60°.

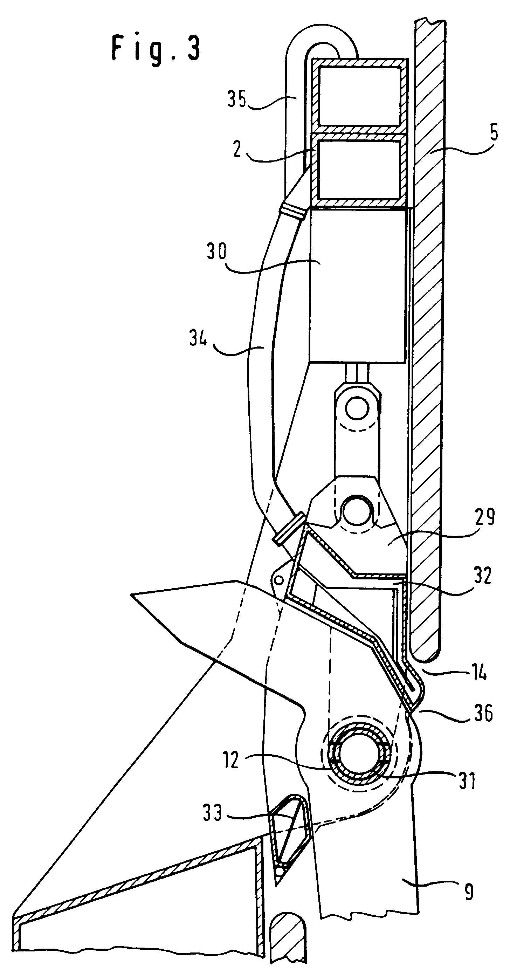

Der in Fig. 3 dargestellte Ausschnitt zeigt bei einer abgewandelten Ausführungsform die Lagerung eines Fingers in einem Fingergehäuse 29, das sich über einen Stoßdämpfer 30 am Rahmen 2 abstützt. Das erste Drehlager 12 in dem ein Zapfen 31 des Fingers 9 gelagert ist, ist in Seitenwänden des Fingergehäuses 29 vorgesehen. Das Fingergehäuse besitzt außerdem Kühlkanäle 32 und 33 an den Stellen, die der Öffnung 14 in der Wand des Schachtes 5 zugekehrt sind. Zur Versorgung der Kühlkanäle 32 und 33 mittels Kühlwasser sind Leitungen 34 und 35 vorgesehen, die an, im Rahmen 2 vorhandene, Kühlwasserkanäle angeschlossen sind. Der zum Schachtinneren weisende Abschnitt des Fingergehäuses 29, der den Kühlwasserkanal 32 begrenzt ist an der Unterseite mit einer Kante 36 ausgestattet, die zum Brechen von Schlackenansätzen dient. In der Figur ist die Freigabestellung des Fingers 9, dargestellt.

Bei einer Stoßbelastung des Fingers 9 wird das Fingergehäuse 29 senkrecht nach unten bewegt und hierbei die auf das erste Lager 12 einwirkende Stoßenergie durch den Stoßdämpfer 30 gedämpft.

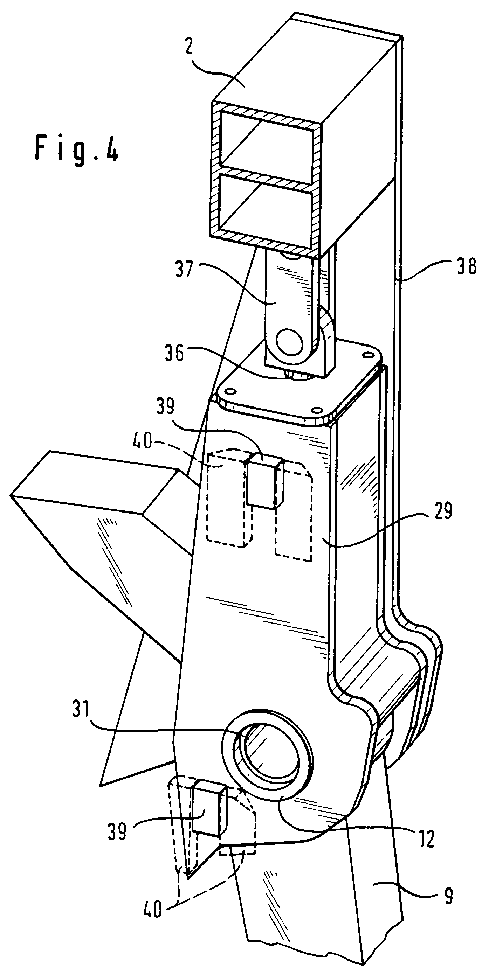

Fig. 4 zeigt einen der Fig. 3 entsprechenden Ausschnitt in perspektivischer Darstellung, wobei hier jedoch der Stoßdämpfer 30 in das Fingergehäuse 29 integriert ist.

Ebenso wie bei dem vorhergehenden Ausführungsbeispiel ist das erste Drehlager 12 fest im Fingergehäuse 29 angeordnet, welches sich über den Stoßdämpfer mittels einer Zugstange 36 und Verbindungselemente 37 am Rahmen 2 abstützt. Beidseitig des Fingergehäuses 29 befinden sich fest mit dem Rahmen 2 verbundene Führungswände 38, von denen in Fig. 4 nur die hintere Führungswand dargestellt ist. Das Fingergehäuse 29 ist an den den Führungswänden 38 zugewandten Seiten mit Gleitfedern 39 versehen, die zwischen, an den Führungswänden 38 angebrachten, Führungsleisten 40 geführt werden. Auf diese Weise wird bei einer Stoßbeanspruchung eine senkrechte Verschiebung des Fingergehäuses unter Ausnutzung der Dämpfungswirkung des Stoßdämpfers erzwungen.

Wie Fig. 4 erkennen läßt, ist das Fingergehäuse 29 zusammen mit dem, in diesem Fingergehäuse gelagerten, Finger 9 als eine auswechselbare konstruktive Einheit ausgebildet, die ein Auswechseln eines Fingers während des Betriebs des Chargiergutvorwärmers ermöglicht.

## Patentansprüche

1. Chargiergutvorwärmer zum Vorwärmen von Chargiergut für ein metallurgisches Schmelzaggregat mit
einem Schacht (5), der in einem Rahmen (2) befestigt ist und im unteren Bereich einander gegenüberliegende, durch ein Stellglied (6) verschwenkbare Sperrorgane (7, 8) aufweist,
die jeweils parallel und im Abstand zueinander angeordnete Finger (9, 10) enthalten, die in einem sich an dem Rahmen abstützenden ersten Drehlager (12, 13) gelagert sind, und
die aus einer Schließstellung, in der innere Abschnitte der Finger (9, 10) zum Festhalten von Chargiergut in den Innenraum des Schachtes (5) ragen, in eine Freigabestellung nach unten schwenkbar sind, in der diese Abschnitte der Finger nach unten weisen und den Durchtritt durch den Schacht (5) freigeben,
dadurch **gekennzeichnet**, daß
die Finger (9, 10) eines Sperrorgans (7, 8) im ersten Lager (12, 13) mit einem mittleren Abschnitt gelagert sind,
daß sie mit einem durch eine Öffnung (14, 15) in der Schachtwand nach außen geführten, äußeren Abschnitt über einen Kniehebelmechanismus (16, 17), aus einem unteren und einem oberen, durch ein Scharniergelenk (20) miteinander verbundenen Hebelarm (18, 19), in einem zweiten Drehlager (21, 22) des Rahmens (2) gelagert sind, und daß
die unteren oder die oberen Hebelarme (18, 19) wenigstens zweier Kniehebelmechanismen durch ein Verbindungsglied (23) miteinander verbunden sind, an dem ein sich in einem dritten Drehlager (26, 27) des Rahmens (2) abstützendes Stellglied (6) gelenkig angreift.

2. Chargiergutvorwärmer nach Anspruch 1, dadurch **gekennzeichnet**, daß sich die Kniehebelmechanismen (16, 17) in der Schließstellung der Sperrorgane (7, 8) in ihrer Strecklage befinden.

3. Chargiergutvorwärmer nach Anspruch 1 oder 2, dadurch **gekennzeichnet**, daß von den einem Sperrorgan (7, 8) zugeordneten Drehlagern das zweite Drehlager (21, 22) oberhalb des ersten (12, 13) und das dritte Drehlager (26, 27) oberhalb des zweiten (21, 22) angeordnet ist.

4. Chargiergutvorwärmer nach einem der Ansprüche 1 bis 3, dadurch **gekennzeichnet**, daß der Rahmen (2) in Form einer quaderförmigen Käfigkonstruktion aus waagrechten Balken (3) und senkrechten Säulen (4) gebildet ist.

5. Chargiergutvorwärmer nach einem der Ansprüche 1 bis 4, dadurch **gekennzeichnet**, daß in den unteren und/oder oberen Hebelarmen (18, 19) der Kniehebelmechanismen (16, 17) Stoßdämpfer (28) vorgesehen sind.

6. Chargiergutvorwärmer nach einem der Ansprüche 1 bis 5, dadurch **gekennzeichnet**, daß die inneren Abschnitte der Finger (9, 10) in der Schließstellung der Sperrorgane (7, 8) schräg nach unten geneigt sind.

7. Chargiergutvorwärmer nach einem der Ansprüche 1 bis 6, dadurch **gekennzeichnet**, daß der Drehwinkel der inneren Abschnitte der Finger (9, 10) aus der Schließstellung in die senkrecht nach unten weisende Freigabestellung im Bereich von 55° bis 65° liegt.

8. Chargiergutvorwärmer nach einem der Ansprüche 1 bis 7, dadurch **gekennzeichnet**, daß die inneren Abschnitte der Finger (9) des einen Sperrorgans (7) länger als die gegenüberliegenden inneren Abschnitte der Finger (10) des zweiten Sperrorgans (8) ausgebildet sind.

9. Chargiergutvorwärmer nach einem der Ansprüche 1 bis 8, dadurch **gekennzeichnet**, daß bei wenigstens einem Teil der Finger (9, 10) die äußeren Abschnitte gegenüber den inneren Abschnitten nach unten abgewinkelt sind.

10. Chargiergutvorwärmer nach einem der Ansprüche 1 bis 9, dadurch **gekennzeichnet**, daß sich das erste Drehlager (12, 13) über einen Stoßdämpfer (30) am Rahmen (2) abstützt.

11. Chargiergutvorwärmer nach einem der Ansprüche 1 bis 10, dadurch **gekennzeichnet**, daß jeder Finger (9, 10) in einem eigenen Lagergehäuse (29) gelagert ist, das das erste Drehlager (12, 13) für den betreffenden Finger (9, 10) trägt und zusammen mit dem Finger eine auswechselbare konstruktive Einheit bildet.

12. Chargiergutvorwärmer nach Anspruch 11, dadurch **gekennzeichnet**, daß sich das Lagergehäuse (29) über einen Stoßdämpfer (30) am Rahmen (2) abstützt.

13. Chargiergutvorwärmer nach Anspruch 11 oder 12, dadurch **gekennzeichnet**, daß das Lagergehäuse (29) zwischen am Rahmen (2) befestigten Führungswänden (38) senkrecht verschiebbar ist.

## Claims

1. A charging material preheater for preheating charging material for a metallurgical smelting plant comprising:
a shaft (5) which is fixed in a frame structure (2) and in the lower region has mutually oppositely disposed closure members (7, 8) which are pivotable by a control member (6) and
which include respective parallel spaced-apart fingers (9, 10) mounted in a first rotary mounting (12, 13) supported on the frame structure and
which are pivotable downwardly from a closed position in which inner portions of the fingers (9, 10) project into the internal space of the shaft (5) for retaining charging material into a release position in which said portions of the fingers face downwardly and release the material to pass through the shaft (5),
characterized in that
the fingers (9, 10) of a closure member (7, 8) are mounted in the first mounting (12, 13) with a central portion,
they are mounted in a second rotary mounting (21, 22) of the frame structure (2) with an outer portion which is passed outwardly through an opening (14, 15) in the shaft wall, by way of an elbow lever mechanism (16, 17) comprising lower and upper lever arms (18, 19) which are connected together by a hinge joint (20), and
the lower or the upper lever arms (18, 19) of at least two elbow lever mechanisms are connected together by a connecting member (23) which is pivotably engaged by a control member (6) supported in a third rotary mounting (26, 27) of the frame structure (2).

2. A charging material preheater according to claim 1 characterized in that in the closed position of the closure members (7, 8) the elbow lever mechanisms (16, 17) are in their extended position.

3. A charging material preheater according to claim 1 or claim 2 characterized in that, of the rotary mountings associated with a closure member (7, 8), the second rotary mounting (21, 22) is arranged above the first (12, 13) and the third rotary mounting (26, 27) is arranged above the second (21, 22).

4. A charging material preheater according to one of claims 1 through 3 characterized in that the frame structure (2) is in the form of a parallelepipedic cage construction comprising horizontal beams (3) and vertical pillars (4).

5. A charging material preheater according to one of claims 1 through 4 characterized in that shock absorbers (28) are provided in the lower and/or upper lever arms (18, 19) of the elbow lever mechanisms (16, 17).

6. A charging material preheater according to one of claims 1 through 5 characterized in that the inner portions of the fingers (9, 10) are inclined obliquely downwardly in the closed position of the closure members (7, 8).

7. A charging material preheater according to one of claims 1 through 6 characterized in that the angle of rotation of the inner portions of the fingers (9, 10) from the closed position into the release position of facing perpendicularly downwardly is in the range of 55° through 65°.

8. A charging material preheater according to one of claims 1 through 7 characterized in that the inner portions of the fingers (9) of the one closure member (7) are longer than the oppositely disposed inner portions of the fingers (10) of the second closure member (8).

9. A charging material preheater according to one of claims 1 through 8 characterized in that, in the case of at least some of the fingers (9, 10), the outer portions are angled downwardly relative to the inner portions.

10. A charging material preheater according to one of claims 1 through 9 characterized in that the first rotary mounting (12, 13) is supported on the frame structure (2) by way of a shock absorber (30).

11. A charging material preheater according to one of claims 1 through 10 characterized in that each finger (9, 10) is mounted in its own mounting housing (29) which carries the first rotary mounting (12, 13) for the respective finger (9, 10) and which together with the finger forms a replaceable structural unit.

12. A charging material preheater according to claim 11 characterized in that the mounting housing (29) is supported on the frame structure (2) by way of a shock absorber (30).

13. A charging material preheater according to claim 11 or claim 12 characterized in that the mounting housing (29) is displaceable perpendicularly between guide walls (38) which are fixed to the frame structure (2).

## Revendications

1. Préchauffeur de produit à charger, pour préchauffer du produit à charger destiné à une unité métallurgique de fusion, comportant
un puits (5) qui est fixé à un bâti (2) et qui comporte, dans la partie inférieure, des organes (7, 8) de retenue, qui se font face et qui peuvent être basculés par un élément (6) de réglage,
qui comportent des doigts (9, 10) qui sont disposés parallèlement les uns aux autres et à distance les uns des autres et qui sont montés dans un premier palier (12, 13) tournant prenant appui sur le bâti et
qui peuvent basculer d'une position de fermeture, en laquelle des tronçons (9, 10) intérieurs des doigts (9, 10) font saillie à l'intérieur du puits pour retenir du produit à charger, à une position de dégagement, en laquelle ces tronçons des doigts pointent vers le bas et dégagent le passage dans le puits (5),
caractérisé en ce que
les doigts (9, 10) d'un organe (7, 8) de retenue sont montés dans le premier palier (12, 13) par un tronçon médian,
en ce que, par l'intermédiaire d'un mécanisme (16, 17) à genouillère, constitué d'un bras (18) de levier inférieur et d'un bras (19) de levier supérieur reliés l'un à l'autre par une articulation (20), ils sont montés dans un deuxième palier (21, 22) du bâti par un tronçon extérieur, qui passe à l'extérieur dans une ouverture (14, 15) ménagée dans la paroi du puits, et
en ce que les bras (18, 19) de levier inférieurs et supérieurs d'au moins deux mécanismes à genouillère sont reliés l'un à l'autre par un élément (23) de liaison qu'un élément (6) de réglage prenant appui sur un troisième palier (26, 27) tournant du bâti (2) attaque en y étant articulé.

2. Préchauffeur de produit à charger suivant la revendication 1, caractérisé en ce que les mécanismes (16, 17) à genouillère se trouvent en leur position déployée en la position de fermeture des organes (7, 8) de retenue.

3. Préchauffeur de produit à charger suivant la revendication 1 ou 2, caractérisé en ce que, parmi les paliers tournants associés à un organe (7, 8) de retenue, le deuxième palier (21, 22) tournant est monté au-dessus du premier palier (12, 13) tournant et le troisième palier (26, 27) tournant est monté au-dessus du deuxième (21, 22).

4. Préchauffeur de produit à charger suivant l'une des revendications 1 à 3, caractérisé en ce que le bâti (2) est formé en forme d'une cage carrée constituée de barres (3) horizontales et de colonnes (4) verticales.

5. Préchauffeur de produit à charger suivant l'une des revendications 1 à 4, caractérisé en ce qu'il est prévu des absorbeurs (28) de chocs dans les bras (18, 19) de levier supérieurs et/ou inférieurs des mécanismes (16, 17) à genouillère.

6. Préchauffeur de produit à charger suivant l'une des revendications 1 à 5, caractérisé en ce que les tronçons intérieurs des doigts (9, 10) sont inclinés en biais vers le bas en la position de fermeture des organes (7, 8) de retenue.

7. Préchauffeur de produit à charger suivant l'une des revendications 1 à 6, caractérisé en ce que l'angle de rotation des tronçons intérieurs des doigts (9, 10) de la position de fermeture à la position de dégagement pointant verticalement vers le bas est compris entre 55° et 65°.

8. Préchauffeur de produit à charger suivant l'une des revendications 1 à 7, caractérisé en ce que les tronçons intérieurs des doigts (9) de l'un (7) des organes de retenue sont plus longs que les tronçons intérieurs opposés des doigts (10) du deuxième organe (8) de retenue.

9. Préchauffeur de produit à charger suivant l'une des revendications 1 à 8, caractérisé en ce que, pour au moins une partie des doigts (9, 10), les tronçons extérieurs sont coudés vers le bas par rapport aux tronçons intérieurs.

10. Préchauffeur de produit à charger suivant l'une des revendications 1 à 9, caractérisé en ce que le premier palier (12, 13) tournant prend appui sur le bâti (2) par l'intermédiaire d'un absorbeur (30) de chocs.

11. Préchauffeur de produit à charger suivant l'une des revendications 1 à 10, caractérisé en ce que chaque doigt (9, 10) est monté dans un logement (29) pour doigt, qui porte le premier palier (12, 13) tournant pour le doigt (9, 10) concerné et qui, conjointement avec le doigt, forme une unité de construction pouvant être remplacée.

12. Préchauffeur de produit à charger suivant la revendication 11, caractérisé en ce que le logement (29) pour doigt prend appui sur le bâti (2) par l'intermédiaire d'un absorbeur (30) de chocs.

13. Préchauffeur de produit à charger suivant la revendication 11 ou 12, caractérisé en ce que le logement (29) pour doigt coulisse verticalement entre des parois (38) de guidage fixées au bâti (2).
